# EUROPEAN PATENT SPECIFICATION

(11) **EP 1 829 302 B1**
(45) Date of publication and mention of the grant of the patent: **29.10.2008**
(21) Application number: 05824922.8
(22) Date of filing: 03.11.2005
(51) Int. Cl.: H04L 12/56, H04L 12/28

(54) **PUSH-TO-X OVER CELLULAR COORDINATED FLOOR AND PACKET SCHEDULING**
PUSH-TO-X ÜBER ZELLUAR-KOORDINIERTE GRUND- UND PAKETEINTEILUNG
PROGRAMMATION COORDONNEE D'ACCES A LA PAROLE ET DE PAQUETS DE COMMUNICATION INSTANTANEE SUR RESEAU CELLULAIRE

(30) Priority: 15.12.2004 US 12999
(43) Date of publication of application: 05.09.2007
(73) Proprietor: MOTOROLA, INC., Schaumburg, IL 60196 (US)
(72) Inventor: ALBERTH JR., William P., Crystal Lake, Illinois 60014 (US); BALASURIYA, Senaka, Arlington Heights, Illinois 60004 (US); BI, Hao, Lake Zurich, IL 60047 (US); NARASIMHA, Murali, Grayslake, IL 60030 (US)
(74) Representative: Openshaw, Paul Malcolm
(86) International application number: PCT/US2005/039727
(87) International publication number: WO 2006/065379

(56) References cited:
- US-A1- 2002 173 326
- "PUSH-TO-TALK OVER CELLULAR (POC) USER PLANE; TRANSPORT PROTOCOLS; POC RELEASE 1.0;" TRANSPORT PROTOCOLS V1.1.0, August 2003 (2003-08), page COMPLETE, XP000863836

## Description

### FIELD OF THE DISCLOSURE

This disclosure relates generally to push-to-X (PTX) service in a cellular telephone communication system, and more particularly to reducing wasted network capacity in certain PTX over Cellular (PoC) connection setups.

### BACKGROUND OF THE DISCLOSURE

Push-to-talk (PTT) refers to a half-duplex mode of communication during which a single user has mutually exclusive use of a communication channel for the transmission of voice information to another user or group of users. From an operational viewpoint, an originating party presses a PTT switch on a mobile device, possibly awaits a "ready" tone, speaks into a microphone of the mobile device, and then releases the PTT switch. At this point, a former called party can press a PTT switch on his own mobile device, possibly await a "ready" tone, speak into the microphone, and release the PTT switch. This procedure is repeated with different parties becoming the originating user and transmitting to one or more called parties until the conversation has completed.

PTT service avoids the typical dialing and ringing sequence of standard telephony service. There is a time delay, however, between the moment that a user initiates PTT service (usually indicated by pressing a PTT switch) and the moment a PTT connection is set up (usually indicated by a "ready" tone). During this time delay, the originating user's mobile device usually has been assigned packet data slots for a data connection to the communication infrastructure; however, the mobile device has not yet been granted the "floor" indicating that the PIT connection is set up and that the originating user can transmit speech. This time delay between packet data slot assignment and floor grant represents a portion of an active packet data session where no information is being transferred and thus is wasted network capacity.

[0003a] US 2002/173326 A1 discloses a method and apparatus for reducing latency in a group communication network that provides for a significant reduction in the actual total dormancy wakeup time and the PTT latency by exchanging group call signaling when mobiles are dormant and no traffic channel is active.

the various aspects, features and advantages of the disclosure will become more fully apparent to those having ordinary skill in the art upon careful consideration of the following Drawings and accompanying Detailed Description.

### BRIEF DESCRIPTION OF THE DRAWINGS

FIG.1 shows a Third Generation (3G) Code Division Multiple Access (CDMA 1x) system architecture with push-to-talk (PTT) capabilities according to a sample system embodiment.

FIG. 2 shows a sample signal flow diagram for setting up a push-to-talk call over the Third Generation (3G) Code Division Multiple Access (CDMA 1x) system shown in FIG.1 according to a first embodiment.

FIG. 3 shows a sample signal flow diagram for setting up a push-to-talk call over the Third Generation (3G) Code Division Multiple Access (CDMA 1x) system shown in FIG.1 according to a second embodiment.

FIG. 4 shows a flow chart for processing, according to the first and second embodiments shown in FIG. 2 and FIG. 3, a Push-to-talk over Cellular (PoC) floor request at the PoC server in the Third Generation (3G) Code Division Multiple Access (CDMA 1x) system shown in FIG. 1.

FIG. 5 shows a sample signal not diagram for setting up a push-to-talk call over the Third Generation (3G) Code Division Multiple Access (CDMA 1x) system shown in FIG.1 according to a third embodiment.

FIG. 6 shows a flow chart for processing, according to the third embodiment, a Push-to-talk over Cellular (PoC) floor grant at the packet data serving node in the Third Generation (3G) Code Division Multiple Access (CDMA 1x) system shown in FIG.1.

### DETAILED DESCRIPTION OF THE EMBODIMENTS

This method for coordinated floor and packet scheduling for Push-to-X over Cellular (PoC) services delays a packet data slot assignment until after a PoC floor has been granted by a PoC server. By reducing the time period between slot assignment and floor grant, this method reduces the wasting of packet data network resources while the communication device is waiting for a PoC floor grant. Setting up a Push-to-X over Cellular (PoC) call session includes an originating communication device transmitting a PoC floor request message to a PoC server, the PoC server sending a PoC floor grant message to a packet control function, the packet control function assigning packet data slots to the originating communication device and setting up an active packet data session, and communicating a PoC floor grant and packet data slot assignment to the originating communication device.

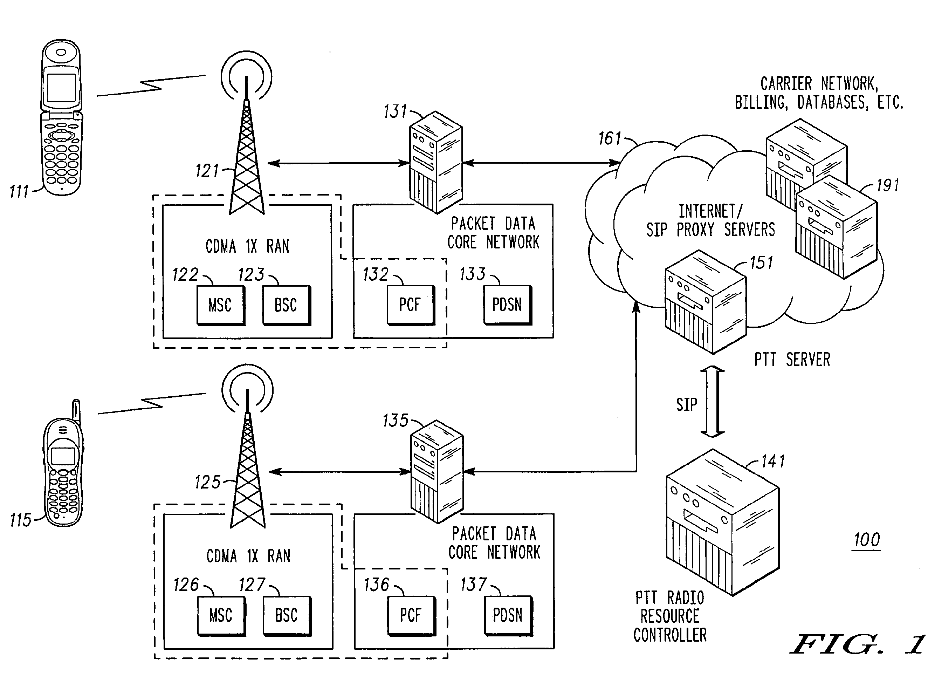

FIG.1 shows a Third Generation (3G) Code Division Multiple Access (CDMA 1x) system architecture with push-to-talk (PTT) capabilities according to a sample system embodiment. PTT is a well-known example of push-to-X (PTX) half-duplex communication services. This embodiment, however, can be expanded to other PTX services such as push-to-video, push-to-voicemail, and combinations of this and other push-to-media. Although this system embodiment is a CDMA 1x system, a GSM/GPRS system can be substituted using the concepts disclosed in this patent application to produce different messages between the various GSM system components (e.g., gateway GPRS support nodes and serving GPRS support nodes, etc.). Additionally, wireless local access network (WLAN) technology, as well as hybrids, blends, and future evolutions of communication technologies, can use the concepts disclosed in this patent application, especially with the voice-over-IP protocol architecture.

In this PTT system 100, an originating communication device 111 wirelessly communicates with a radio access network 121. This radio access network 121 connects to a packet data core network 131 which in turn connects to a PTT radio resource controller 141 (sometimes called a PTT radio resource manager) and a PTT server 151 (sometimes called a PTT data switch) through the Internet 161. Other elements 191, such as the carrier network, billing servers, databases, and other equipment are also coupled to the Internet 161.

In this example, a called communication device 115 wirelessly communicates with a different radio access network 125. The radio access network 125 connects to a packet data core network 135, which in turn uses an Internet Protocol (IP) to connect to the PTT radio resource controller 141 and PTT server 151 through the Internet 161. Of course, the called communication device 115 can be served by the same radio access network as the originating communication device 111.

For the purposes of providing detail for this embodiment, the communication devices 111,115 are shown as wireless CDMA 1x telephone user equipment, although one or more communication devices could be implemented as another type of wireless communication device such as a personal digital assistant, a pocket personal computer, or a laptop computer. Additionally, the communication device can be a wired device such as a landline telephone, a desktop computer, or a cable modem. Because in this embodiment the communication devices are CDMA 1x user equipment, the radio access networks 121, 125 are CDMA 1x radio access networks; however, alternate radio access networks such as WLAN, CDMA2000, and GSM/GPRS are available for appropriately compatible communication devices.

The radio access networks 121, 125 each include a base station controller (BSC) 123, 127 and a mobile switching center (MSC) 122, 126, which assist in circuit-switched session set-up. The radio access networks connect to packet data core networks 131, 135, that each includes a packet control function (PCF) 132,136 and a Packet Data Serving Node (PDSN) 133, 137, which assist in packet data session set-up. The packet data core networks 131, 135 in turn connect to the PTT radio resource controller 141 and PTT server 151 through the Internet 161.

When the originating communication device 111 is operated for a PoC call, a signal goes from the communication device 111 to various elements of the radio access network 121 and packet data core network 131 to set up the PoC call. The originating communication device 111 sends a message to the PTT server 151 requesting the floor. When the PTT server 151 grants the floor, it sends a message to the PCF 132, which then sets up an active packet data session [with the BSC 123]. When the active data packet session is fully set up, the BSC 123 sends a combined floor and packet grant message to the originating communication device 111, which includes a packet data slot assignment along with a floor grant. At this point, the originating communication device 111 will usually emit a "ready" tone and the originating user talks, and the device 111 transmits packets that are sent to the called PoC communication device(s) 115.

By delaying the completion of an active packet data session until the PoC floor has been granted, the PTT system 100 delays assigning packet data slots to an originating mobile device 111 until the device 111 is allowed to use the packet data slots. This coordination of floor and packet scheduling minimizes waste of uplink packet data capacity.

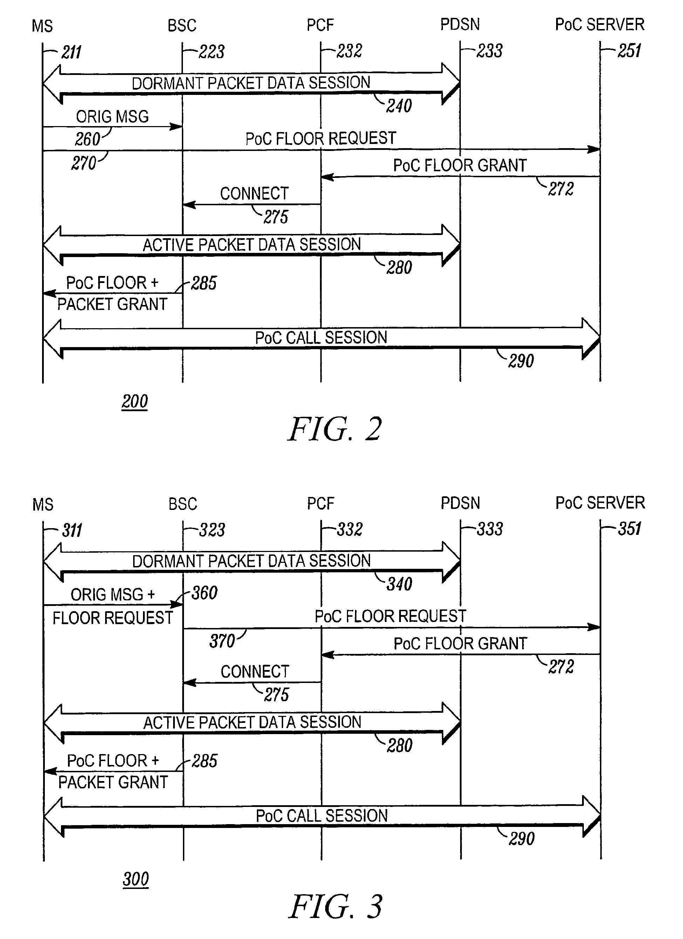

FIG. 2 shows a sample signal flow diagram 200 for setting up a push-to-talk call over the Third Generation (3G) Code Division Multiple Access (CDMA 1x) system 100 shown in FIG.1 according to a first embodiment. Vertical line 211 represents signaling to and from an originating communication device (MS), such as communication device 111 shown in FIG. 1. Vertical line 223 represents signaling to and from a base station controller (BSC), which can be implemented as a component of a radio access network such as the CDMA 1x radio access network 121 shown in FIG.1. Vertical line 232 represents signaling to and from a packet control function (PCF), which can be implemented as a component of a radio access network, such as the RAN 121 shown in FIG.1. Vertical line 233 represents signaling to and from a packet data serving network (PDSN), which can be implemented as a component of a packet data core network, such as the packet data core network 131 shown in FIG.1. Vertical line 251 represents signaling to and from a PTT-over-Cellular (PoC) server, which can be implemented as the PTT server 151 shown in FIG. 1.

Initially, the originating communication device (MS) is in a dormant packet data session 240 where the device is registered with its associated packet data core network through the PDSN 233, but there is no active traffic channel between the communication device and its associated radio access network. When a user presses a PTT switch to request service for a one-to-one or one-to-many PoC call, an origination message 260 is sent from the originating communication device 211 to the BSC 223 requesting a PTT session.

This message 260 includes fields for (1) an indication that the PoC origination is for a PoC connection and (2) an identification of the called communication device(s). The identification could be a user identifier or a group identifier in the form of a Network Access Identifier (NAI), a mobile identification number (MIN), an International Mobile Station Identity (IMSI), directory number, or other type of identification for the communication device. Alternately, a single PoC origination message can include multiple identifications in field (2), which identifications can be separated into multiple messages used to locate individual called communication devices.

The network locates the called communication device(s) using known techniques, pages them, and instructs the called communication devices to prepare to receive a PoC call in accordance with known methods. Meanwhile, the originating communication device 211 sends a PoC floor request message 270 to the PoC server 251. This PoC floor request message 270 can be implicit in a session initiation protocol (SIP) invite message or can be an explicit real-time control protocol (RTCP) message. Note that either an origination message or a short data burst can be used to transport this PoC floor request message 270 at the radio layer. Generally, a SIP invite message includes multiple addresses for the called PoC communication devices or a group address.

When the called communication device(s) have completed their preparations to receive a PoC call, the PoC server 251 sends a PoC floor grant message 272 to the PCF 232 via PDSN 233. At this point, the PCF 232 sends a connection message 275 to activate the dormant packet data session 240, and BSC 223 assigns packet data slots for use by the originating communication device 211. In this first embodiment, the packet data session 280 is governed by the Service Option 33 (SO33) protocol. Of course, other packet data protocols can be used, especially as technology progresses.

After the active packet data session 280 is set up, the BSC 223 sends a message 285 containing a combined floor and packet grant that (1) notifies the originating communication device 211 that it has the floor and also (2) informs the device 211 of the packet data slots it can use for the requested PoC communication. At this point, the user of the originating communication device 211 can send a half-duplex voice or other call communication using a PoC call session 290.

If a called PoC communication device desires to communicate, the user presses a PTX switch, which triggers a PoC floor request such as message 270. At this point, the PoC floor request is generally in the form of a RTCP message that is transported using an origination message or a short data burst at the radio layer. (Using a SIP message as a PoC floor request is inappropriate in this situation, because the call session has already been set up.) When the PoC server 251 grants this subsequent PoC floor request, the signal flow for the new originating communication device continues as previously described.

Delaying the active packet data session 280 until after a PoC floor is granted by the PoC server 251 reduces waste of uplink packet data capacity. Conventionally, an active packet data session is set up before a PoC floor grant message 272 is sent from the PoC server 251. Thus, uplink packet data slots are reserved but not being used for communication while the PoC floor request is being processed and granted by the PoC server 251. Reducing the time period that the uplink packet data slots are reserved but not used allows for more efficient use of network resources.

FIG. 3 shows a sample signal flow diagram 300 for setting up a push-to-talk call over the Third Generation (3G) Code Division Multiple Access (CDMA 1x) system shown in FIG.1 according to a second embodiment. This second embodiment is much like the first embodiment shown in FIG. 2 except that the PoC origination message 260 and the PoC floor request message 270 shown in FIG. 2 are combined into a single message 360 from the originating communication device 311. This embodiment is useful during PTX call set-up situations.

Vertical line 311 represents signaling to and from an originating communication device (MS), such as communication device 111 shown in FIG.1. Vertical line 323 represents signaling to and from a base station controller (BSC), which can be implemented as a component of a radio access network such as the CDMA 1x radio access network 121 shown in FIG.1. Vertical line 332 represents signaling to and from a packet control function (PCF), which can be implemented as a component of a radio access network, such as the RAN 121 shown in FIG.1. Vertical line 333 represents signaling to and from a packet data serving network (PDSN), which can be implemented as a component of a packet data core network, such as the packet data core network 131 shown in FIG.1. Vertical line 351 represents signaling to and from a PTT-over-Cellular (PoC) server, which can be implemented as the PTT server 151 shown in FIG. 1.

Initially, the originating communication device (MS) is in a dormant packet data session 340 where the device is registered with its associated packet data core network through a PDSN 333, but there is no active traffic channel between the communication device and its associated radio access network. When a user presses a PTT switch to request service for a PoC call, a PoC origination and floor request message 360 is sent from the originating communication device 311 to the BSC 323 requesting a PTT session with called communication device(s) as described previously. In addition to the PoC origination indication and called communication device identifiers of the PoC origination message 260 of FIG. 2, the PoC origination and floor request message 360 instructs the BSC 323 to send a PoC floor request message 370 to the PoC server 351. This eliminates the need for a separate uplink message for a PoC floor request.

The remaining signal flows of FIG. 3 have reference numbers that are identical to those in FIG. 2 and represent similar messages and sessions previously described with reference to FIG. 2. If a called PoC communication device desires to participate, the user presses a PTX switch, which triggers a PoC floor request such as message 270 shown in FIG. 2. At this point, the PoC floor request is generally in the form of a RTCP message that is transported using an origination message or a short data burst at the radio layer. (Using a SIP message as a PoC floor request is inappropriate in this situation, because the call session has already been set up.) The signal flow for the new originating communication device continues as previously described in FIG. 2. As in FIG. 2, the second embodiment delays the active packet data session until after a PoC floor is granted by the PoC server 351. An additional savings in uplink packet data capacity occurs when the two messages 260, 270 of FIG. 2 are combined into a single message 360.

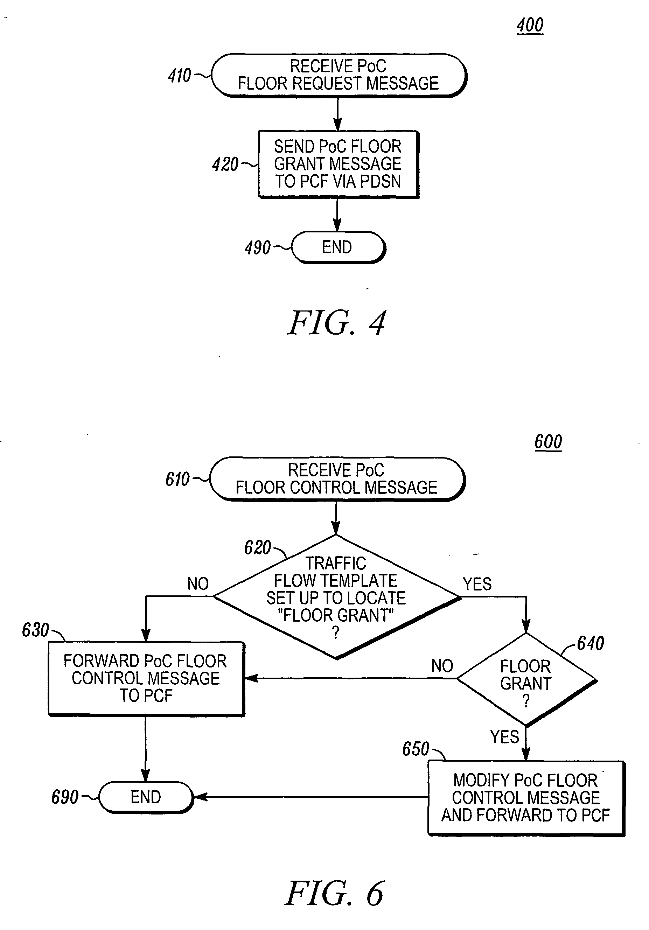

FIG. 4 shows a flow chart 400 for processing, according to the first and second embodiments shown in FIG. 2 and FIG. 3, a Push-to-X over Cellular (PoC) floor request at the PTT server 151 in the Third Generation (3G) Code Division Multiple Access (CDMA 1x) system shown in FIG.1. In the initial step 410, the PoC server 151 receives a PoC floor request. According to the first embodiment, the PoC floor request is a message 270 from the originating communication device 211 shown in FIG. 2. According to the second embodiment, the PoC floor request is a message 370 from the BSC 323 shown in FIG. 3. Regardless of where the PoC floor request is coming from, the PoC server works directly and/ or indirectly with the called communication device(s) to prepare them for a PoC call. When the called communication device(s) are ready for a PoC call, the PoC server sends a PoC floor grant message in step 420 to the PCF 132 shown in FIG.1. This PoC floor grant message triggers the PCF 132 to set up an active packet data session 280 as shown in FIG. 2 and FIG. 3. Although the PoC server continues its involvement in a PoC call, the PoC call set-up procedure is completed at step 490.

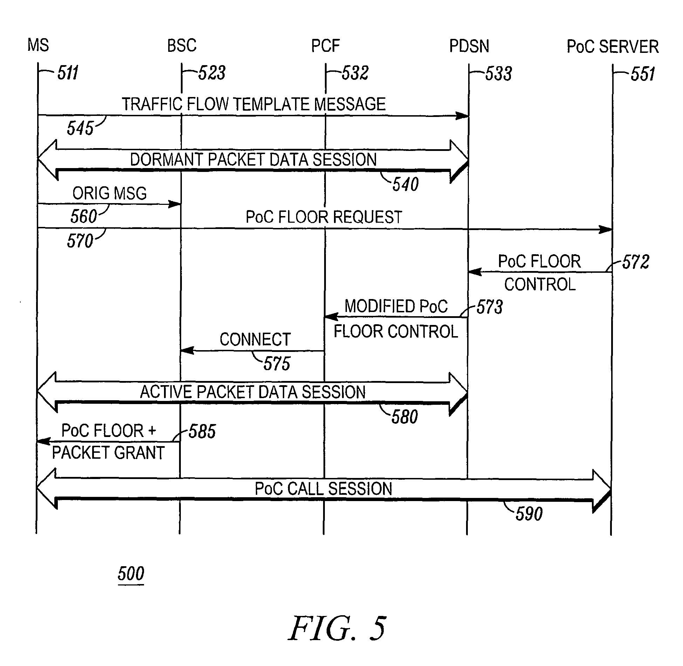

FIG. 5 shows a sample signal flow diagram 500 for setting up a push-to-talk call over the Third Generation (3G) Code Division Multiple Access (CDMA 1x) system shown in FIG. 1 according to a third embodiment. In this third embodiment, a PDSN uses a traffic flow template (TFT) to identify and modify certain PoC floor control messages from a PoC server so that a PCF can set up an active packet data session after the PCF receives the modified PoC floor control message.

Vertical line 511 represents signaling to and from an originating communication device (MS), such as communication device 111 shown in FIG.1. Vertical line 523 represents signaling to and from a base station controller (BSC), which can be implemented as a component of a radio access network such as the CDMA 1x radio access network 121 shown in FIG.1. Vertical line 532 represents signaling to and from a packet control function (PCF), which can be implemented as a component of a radio access network, such as the RAN 121 shown in FIG.1. Vertical line 533 represents signaling to and from a packet data serving network (PDSN), which can be implemented as a component of a packet data core network, such as the packet data core network 131 shown in FIG.1. Vertical line 551 represents signaling to and from a PTT-over-Cellular (PoC) server, which can be implemented as the PTT server 151 shown in FIG. 1.

Initially, the originating communication device (MS) is in a dormant packet data session 540 where the device is registered with its associated packet data core network through the PDSN 533 but there is no active traffic channel between the communication device and its associated radio access network. Sometime before a PoC floor control message 572 is received by the PDSN 533, the originating communication device 511 sets up a traffic flow template using a traffic flow template message 545. This message 545 uses an information element to indicate that the PDSN 533 should inspect incoming PoC floor control messages from the PoC server 551 for specified values indicating whether the floor control message is a floor request, a floor grant, a floor taken, a floor deny, a floor revoke, a floor release, a floor idle, or other floor control treatment type.

Due to the layered structure of a message in this system, a BSC 523 cannot easily determine whether a message is a PoC floor control message or whether a PoC floor control message is specifically a PoC floor grant message. In other words, a BSC is not geared to inspect the area of a message that indicates that the message is a PoC floor control message or more specifically a PoC floor grant message. In this third embodiment, the traffic flow template message 545 instructs the PDSN 533 to inspect incoming PoC floor control messages for a value representing a PoC floor grant and then to modify the PoC floor control messages that contain a PoC floor grant so that the PCF 532 and BSC 523 can more easily identify that a message as a PoC floor grant message. In other words, modify the Generic Routing Encapsulation (GRE) header or payload to indicate a PoC floor grant.

When a user presses a PTT switch to request service for a PoC call, a PoC origination message 560 is sent from the originating communication device 511 to the BSC 523 requesting a PTT session with one or more called communication devices. Next, the originating mobile station 511 sends a PoC floor request message 570 to the PoC server 551. Note that this third embodiment shows the use of two messages for origination and PoC floor request; however, these two messages could be replaced with a single message such as the message 360 shown in FIG. 3.

The network locates the called communication device(s) using known techniques, pages them, and instructs the called communication devices to prepare to receive a PoC call in accordance with known methods. When the called communication device(s) have completed their preparations to receive a PoC call, the PoC server 551 sends a PoC floor control message 572 with a treatment type indicating "floor grant" to the MS 511 via PDSN 533, PCF 532, and BSC 523. When a PoC floor control message 572 with treatment type indicating "floor grant" is received at the PDSN 533 and matches the criteria in the traffic flow template at the PDSN 533, the PDSN 533 creates a modified PoC floor control message 573 and sends it to the PCF 532.

The PoC floor control message 573 is modified such that the internet protocol (IP) packet containing the PoC floor grant message is encapsulated in a Generic Routing Encapsulation (GRE) packet and the GRE packet is marked with a special flag to indicate that the message 573 is a PoC floor grant. The PCF 532 sends the PoC floor grant message 573 to BSC 523 with the GRE packet marked with a special flag to indicate that the message 573 is a PoC floor grant, which triggers the BSC 523 to assign packet data slots for use by the originating communication device 511. After the packet data slots are assigned, the BSC 523 sends a PoC floor and packet grant message 585 that includes PoC floor grant and packet data slot assignment information. Now the user of the originating communication device 511 can send a half-duplex voice or other call communication using a PoC call session 590.

If a called PoC communication device desires to participate, the user presses a PTX switch, which triggers a PoC floor request such as message 570. At this point, the PoC floor request is generally in the form of a RTCP message that is transported using an origination message or a short data burst at the radio layer. (Using a SIP message as a PoC floor request is inappropriate in this situation, because the call session has already been set up.) When the PoC server 551 grants this subsequent PoC floor request, the signal flow for the new originating communication device continues as previously described.

This third embodiment shows the use of a particular mechanism, a traffic flow template at the PDSN 533, for identifying and modifying PoC floor control messages of treatment type "floor grant" to make it easy for a PCF 532 and BSC 523 to distinguish a floor grant from other floor control treatment types and other IP packets in order to facilitate coordinated floor and packet scheduling. By facilitating the delay of an active packet data session until after a PoC floor is granted by the PoC server 551, the system reduces waste of uplink packet data capacity and allows for more efficient use of network resources. In an alternative embodiment, where the BSC 523 is capable of inspecting IP packets, in other words having capabilities similar to the PDSN 533, the MS 511 may set up the traffic flow template with the BSC 523, and when a PoC floor control message 572 with treatment type indicating "floor grant" is received at the BSC 523 and matches the criteria in the traffic flow template, the BSC 523 assigns packet data slots for use by the originating communication device. After the packet data slots are assigned, the BSC 523 sends a PoC floor and packet grant message 585 that includes PoC floor grant and packet data slot assignment information. Now the user of the originating communication device 511 can send a half-duplex voice or other call communication using a PoC call session 590.

FIG. 6 shows a flow chart 600 for processing, according to the third embodiment, a Push-to-X over Cellular (PoC) floor control message at the packet data serving node 133 in the Third Generation (3G) Code Division Multiple Access (CDMA 1x) system shown in FIG.1. Step 610 receives a PoC floor control message. If step 620 determines that there is no traffic flow template set up to locate floor control messages of the treatment type "floor grant," step 630 forwards the PoC floor control message to the PCF, and the flow ends in step 690.

If step 620 determines that there is a traffic flow template set up to locate floor control messages of the treatment type "floor grant," step 640 compares the information element in the PoC floor control message with the traffic flow filter information element. If step 640 determines that there is no match (i.e., the treatment type of the PoC floor control message is not "floor grant"), then step 630 forwards the PoC floor control message to the PCF. If, however, there is a match (i.e., the treatment type of the PoC floor control message is "floor grant") then step 650 modifies the PoC floor control message and forwards the modified message to the PCF before ending in step 690.

The modified message has a GRE header that is marked to indicate that the PoC floor control message is of treatment type "floor grant." When the BSC sees the marking in the GRE header, it recognizes the message as a PoC floor grant and sets up an active packet data session.

By delaying the set-up of an active packet data session until after a Push-to-X over Cellular (PoC) floor grant message is transmitted by a PoC server, the coordinated floor and packet scheduling allows for more efficient use of uplink packet data network resources. Generally speaking, a PoC server sends a PoC floor grant message to a packet control function (PCF) which then triggers assignment of packet data slots to an originating communication device. Once an active packet data session is set up by the PCF, a base station controller (BSC) notifies the originating communication device that it has the floor and also which packet data slots to use for the PoC call. The first embodiment uses separate PoC origination and PoC floor request messages. The second embodiment uses a combined PoC origination and PoC floor request message. The third embodiment uses a traffic flow filter to distinguish floor control messages of treatment type "floor grant" from other floor control messages and modifies floor grant messages to facilitate the PCF to set up an active packet data session.

While the embodiments have been written around push-to-talk, it should be understood by those skilled in the art that the concepts are equally applicable to other push-to-X services, such as push-to-video and push-to-voicemail. PTT is, after all, a subset of various half-duplex services aggregately known as push-to-X (PTX). Furthermore, it must be understood that the PoC floor is applicable to a single media such as voice or to multiple media types such as voice plus video. Similarly, it should be noted that PoC is not limited to voice, but also to other PTX services, resources, and media types. It should also be understood that this invention applies not only at the beginning of a PoC session, but at any time during a PoC session when a PoC floor grant message is transmitted.

While this disclosure includes what are considered presently to be the preferred embodiments and best modes of the invention described in a manner that establishes possession thereof by the inventors and that enables those of ordinary skill in the art to make and use the invention, it will be understood and appreciated that there are many equivalents to the preferred embodiments disclosed herein and that modifications and variations may be made without departing from the scope of the invention, which are to be limited not by the preferred embodiments but by the appended claims.

It is further understood that the use of relational terms such as first and second, top and bottom, and the like, if any, are used solely to distinguish one from another entity, item, or action without necessarily requiring or implying any actual such relationship or order between such entities, items or actions. Much of the inventive functionality and many of the inventive principles are best implemented with or in software programs or instructions. It is expected that one of ordinary skill, notwithstanding possibly significant effort and many design choices motivated by, for example, available time, current technology, and economic considerations, when guided by the concepts and principles disclosed herein will be readily capable of generating such software instructions and programs with minimal experimentation. Therefore, further discussion of such software, if any, will be limited in the interest of brevity and minimization of any risk of obscuring the principles and concepts according to the present invention.

## Claims

1. A method for coordinating floor and packet scheduling for a communication session, **characterized by**:
delaying assignment of wireless resources to an originating communication device until after a floor grant message has been received.

2. A method according to claim 1 further comprising the step of:
after the step of delaying, sending a combined floor grant and wireless resource assignment message (385) to the originating communication device.

3. A method according to claim 1 further comprising the step of:
before the step of delaying, requesting a floor (360) of the communication session.

4. A method according to claim 3 wherein the step of requesting comprises:
transmitting an origination message (360) to a base station controller.

5. A method according to claim 3 wherein the step of requesting comprises:
transmitting a floor request message combined with an origination message (360) to a base station controller.

6. A method according to claim 5 further comprising the step of:
sending the floor request message (370) from the base station controller to a server.

7. A method in accordance with claim 1 wherein the assignment of wireless resources is a packet data slot.

8. A method in accordance with claim 1 further comprising the step of:
setting up an active packet data session (280) between the originating communication device and a packet control function.

9. A method in a packet data serving network, comprising receiving a floor control message (572); and **characterized by**:
determining if the floor control message is a floor grant message; and
modifying the floor control message to create a modified floor control message (573) indicating floor grant

10. A method according to claim 6 further comprising the step of:
sending the modified floor control message (573) to a packet control function.

## Patentansprüche

1. Verfahren zum Koordinieren der Zugangs- und Paketverwaltung für eine Kommunikationssitzung, **gekennzeichnet durch**:
Verzögern der Zuweisung von Drahtlosressourcen an eine initiierende Kommunikationseinrichtung bis nach Erhalt einer Zugangsvergabemeldung.

2. Verfahren nach Anspruch 1, weiterhin umfassend den Schritt:
nach dem Schritt des Verzögerns, Senden einer kombinierten Zugangsvergabe- und Drahtlosressourcenzuweisungsmeldung (385) an die initiierende Kommunikationseinrichtung.

3. Verfahren nach Anspruch 1, weiterhin umfassend den Schritt:
vor dem Schritt des Verzögerns, Anfordern eines Zugangs (360) der Kommunikationssitzung.

4. Verfahren nach Anspruch 3, wobei der Schritt des Anforderns umfasst:
Übertragen einer Ursprungsmeldung (360) an ein Basisstationsteuergerät.

5. Verfahren nach Anspruch 3, wobei der Schritt des Anforderns umfasst:
Übertragen einer Zugangsanforderungsmeldung kombiniert mit einer Ursprungsmeldung (360) an ein Basisstationsteuergerät.

6. Verfahren nach Anspruch 5, weiterhin umfassend den Schritt:
Senden der Zugangsanforderungsmeldung (370) vom Basisstationsteuergerät an einen Server.

7. Verfahren gemäß Anspruch 1, wobei die Zuweisung von Drahtlosressourcen in einem Paketdaten-Slot besteht.

8. Verfahren gemäß Anspruch 1, weiterhin umfassend den Schritt:
Aufbauen einer aktiven Paketdatensitzung (280) zwischen der initiierenden Kommunikationseinrichtung und einer Paketsteuerungsfunktion.

9. Verfahren in einem Paketdaten-Netzwerkdienst, umfassend den Erhalt einer Zugangssteuerungsmeldung (572);
und **gekennzeichnet durch**:
Feststellen, ob die Zugangssteuerungsmeldung eine Zugangsvergabemeldung ist; und
Modifizieren der Zugangssteuerungsmeldung, um eine modifizierte Zugangssteuerungsmeldung (573) zu erzeugen, die eine Zugangsvergabe anzeigt.

10. Verfahren nach Anspruch 6, weiterhin umfassend den Schritt:
Senden der modifizierten Zugangssteuerungsmeldung (573) an eine Paketsteuerungsfunktion.

## Revendications

1. Procédé de coordination d'une programmation d'accès à la parole et de paquets pour une session de communication, **caractérisé par** l'étape consistant à :
temporiser une affectation de ressources sans fil à un dispositif de communication initiateur jusqu'à ce qu'un message d'autorisation d'accès à la parole ait été reçu.

2. Procédé selon la revendication 1, comprenant en outre l'étape consistant à :
après l'étape de temporisation, envoyer un message (385) d'autorisation d'accès à la parole et d'affectation de ressources sans fil combiné au dispositif de communication initiateur.

3. Procédé selon la revendication 1, comprenant en outre l'étape consistant à :
avant l'étape de temporisation, demander un accès à la parole (360) de la session de communication.

4. Procédé selon la revendication 3, dans lequel l'étape de demande comprend :
la transmission d'un message d'origine (360) à un contrôleur de station de basic.

5. Procédé selon la revendication 3, dans lequel l'étape de demande comprend :
la transmission d'un message de demande d'accès à la parole combiné avec un message d'origine (360) à un contrôleur de station de base.

6. Procédé selon la revendication 5, comprenant en outre l'étape consistant à :
envoyer le message (370) de demande d'accès à la parole du contrôleur de station de base à un serveur.

7. Procédé selon la revendication 1, dans lequel l'affectation de ressources sans fil est un intervalle de temps de données par paquets.

8. Procédé selon la revendication 1, comprenant en outre l'étape consistant à :
configurer une session (280) de données par paquets active entre le dispositif de communication initiateur est une fonction de commande de paquets.

9. Procède dans un réseau de service de données par paquets, comprenant la réception d'un message (572) de commande d'accès à la parole ;
et **caractérisé par** les opérations consistant à :
déterminer si le message de commande d'accès à la parole est un message d'autorisation d'accès à la parole ; et
modifier le message de commande d'accès à la parole pour créer un message de commande d'accès à la parole modifié (573) indiquant une autorisation d'accès à la parole.

10. Procédé selon la revendication 6, comprenant en outre l'étape consistant à :
envoyer le message (573) de commande d'accès à la parole modifié à une fonction de commande de paquets.
